Europäisches Patentamt

European Patent Office

Office européen des brevets

(19)

(11) Veröffentlichungsnummer: **0 015 431**
**B1**

(12) **EUROPÄISCHE PATENTSCHRIFT**

(45) Veröffentlichungstag der Patentschrift:
25.05.83

(51) Int. Cl.³: **C 08 G 63/22**

(21) Anmeldenummer: 80100800.4

(22) Anmeldetag: 18.02.80

(54) **Verfahren zur Herstellung von Neopentylglycol-Polyestern und -Mischpolyestern.**

(30) Priorität: 01.03.79 DE 2907952

(43) Veröffentlichungstag der Anmeldung:
17.09.80 Patentblatt 80/19

(45) Bekanntmachung des Hinweises auf die Patenterteilung:
25.05.83 Patentblatt 83/21

(84) Benannte Vertragsstaaten:
BE DE FR GB IT NL

(56) Entgegenhaltungen:
FR-A-2 390 460
GB-A-1 029 136
US-A-3 330 789

(73) Patentinhaber: BAYER AG, Zentralbereich Patente, Marken und Lizenzen, D-5090 Leverkusen 1, Bayerwerk (DE)

(72) Erfinder: König, Klaus, Dr., Heymannstrasse 50, D-5090 Leverkusen 1 (DE)
Erfinder: Reichmann, Wolfgang, Dr., Vohwinkelallee 19, D-4000 Düsseldorf (DE)
Erfinder: Schönfelder, Manfred, Dr., Höhenstrasse 126, D-5090 Leverkusen 3 (DE)

BUNDESDRUCKEREI BERLIN

Verfahren zur Herstellung von Neopentylglycol-Polyestern und -Mischpolyestern

Die Anmeldung betrifft ein Verfahren der Veresterung einer Dicarbonsäure mit Neopentylglycol und gegebenenfalls bei höheren Temperaturen als Neopentylglycol siedenden Diolen, vorzugsweise Hexandiol-1,6, dadurch gekennzeichnet, daß man 0,2 – 1,0 Gew.-% Ethylenglycol, bezogen auf Polyester, in der Veresterungsstufe mitverwendet.

Neopentylglycol-Polyester und -Mischpolyester sind bekannt. Mit ihnen hergestellte Polyurethan-Kunststoffe zeichnen sich durch optimale mechanische Eigenschaften, wie gutes Kälteverfahren und besondere Hydrolysenstabilität aus, was z. B. für Beschichtungen jeglicher Art von Bedeutung ist.

Neopentylglycol-Polyester und -Mischpolyester werden üblicherweise durch Schmelzveresterung aus (a) mehrwertigen sowie gegebenenfalls einwertigen, vorzugsweise zweiwertigen, Carbonsäuren bzw. deren Anhydriden oder Estern mit niedrigsiedenden Monoalkoholen, (b) Neopentylglycol und gegebenenfalls (c) zusätzlichen mehrwertigen Alkoholen, insbesondere höhersiedenden Diolen, hergestellt (Houben-Weyl, Methoden der organischen Chemie, Bd. 14/2, S. 1 ff., 1963). Bei derartigen Schmelzveresterungen wird nach dem Vermischen der Ausgangskomponenten zuerst in einer Destillationsphase die Hauptmenge des Kondensationswassers oder des Monoalkohols abgetrennt und danach im Vakuum die Veresterung unter Abscheidung des Restes an Kondensationswasser oder Monoalkohol zu Ende geführt. In diesem Stadium treten nun bei der Herstellung von Neopentylglycol-Polyestern und -Mischpolyestern bekannterweise aufgrund der physikalischen Eigenschaften von Neopentylglycol technische Schwierigkeiten auf: Neopentylglycol besitzt einen Schmelzpunkt von ca. 127° C und einen Siedepunkt unter Normaldruck von ca. 208° C. Bei Drücken unterhalb von 50 mbar siedet Neopentylglycol jedoch im Bereich oder unterhalb des Schmelzpunktes; d. h. es sublimiert. Da bei der Herstellung von Neopentylglycol-Polyestern die Temperatur im Reaktionsgefäß während der Vakuumphase etwa 200 – 220° C beträgt, gelangt Neopentylglycol schon bei vergleichsweise geringem Vakuum in merklichen Mengen in die Kolonne, wo es sofort kristallisiert. Diese Erscheinung führt zu einer Reihe von Problemen: Im Laufe der Veresterung wird die Neopentylglycol-Konzentration im Reaktionsgefäß durch Sublimationsverluste unkontrolliert verringert. Dadurch wird das vorgegebene Molverhältnis von Säure- zu Alkoholgruppen in unerwünschter Weise verändert. Während der Kondensation setzt sich das sublimierende Neopentylglycol zum Teil an solchen Stellen der Apparatur wieder ab, an denen leicht Verstopfungen auftreten können, wodurch die Neopentylglycol-Polyesterherstellung insgesamt auch vom Sicherheitsstandpunkt her gesehen problematisch ist. Damit verbunden treten zusätzlich Umweltbeeinträchtigungen auf; insbesondere wird das Abwasser durch Neopentylglycol-Anteile verunreinigt.

Es ist bekannt, daß bei der Herstellung der Neopentylglycol-Polyestern auch größere Mengen an in bezug auf Neopentylglycol höhersiedenden Glycolen mitverwendet werden können, ohne daß die Eigenschaften der aus den Polyestern erzeugten Kunststoffe verschlechtert werden. Deshalb haben Mischpolyester aus z. B. Adipinsäure, Neopentylglycol und Hexandiol besondere Bedeutung. Werden jedoch größere Mengen an niedriger siedenden Glycolen (z. B. Ethylenglycol) eingesetzt, nimmt insbesondere die Hydrolysenstabilität der Kunststoffe in unerwünschter Weise ab.

Die GB-A 1 029 136 beschreibt die Herstellung aromatischer Polyester hohen Molekulargewichts, nämlich Neopentylglycol-modifizierte Polyethylenphthalate mit einem Ethylenterephthalatgehalt von mindestens 15% (entspricht 3,4% Ethylenglykol im Polyester).

Zur Herstellung muß (nach Anspruch 8) eine höhere Menge Ethylenglykol als Ausgangsstoff in der zu veresternden Mischung eingesetzt werden, um die Copolyesterzusammensetzung zwischen 85 und 15% Ethylenterephthalateinheiten zu erreichen.

Somit muß die eingesetzte Ausgangsmenge des Ethylenglycols noch höher sein als 3,4%, um den gewünschten Endwert von 3,4% im Terephthalsäure-Copolyester zu erreichen. Somit führt diese Literaturstelle in Ziel und Menge von der Erfindung weg (bevorzugt sind 5,7 bis 13,7% Ethylenglycol im Polyester).

Die US-A-3 330 789 beschreibt die Herstellung von PVC-Weichmachern aus

a)  einem Glycol (mindestens 50% Neopentylglycol und Ethylenglycol, Propylenglycol und 1,3 Butandiol),

b)  einer aliphatischen Monocarbonsäure mit 7 – 18 C-Atomen,

d)  einer aromatischen Dicarbonsäure,

wobei 2 Mol b) pro 2 – 15 Mol c) + d) eingesetzt werden und die Zahl der Diole um mindestens ein Mol über der Molzahl der Dicarbonsäure liegen soll, wobei der (gegebenenfalls noch höhere) Diolüberschuß während der Veresterung abdestilliert werden soll.

Der niederste Glycolgehalt in der Monocarbonsäure-haltigen Ester-Weichmacherkomposition liegt nach Beispiel XXIV bei 7,7%, also weit über dem erfindungsgemäßen Verfahren.

Die FR-A-12 390 460 betrifft gleichfalls Esterzusammensetzungen unterschiedlicher Art zur Trennung von Blutserum, wobei es sich um Mischungen aus 80 bis 97% Dicarbonsäuren und 3 bis 20% Dimersäuren handelt, welche mit einem $C_3 – C_8$-verzweigtkettigen, aliphatischen

Diol oder einer Mischung aus mindestens 50 Gew.-% der verzweigtkettigen mit einem geradkettigen aliphatischen Diol verestert werden. Beispiel 8 dieser Literaturstelle benutzt eine Mischung aus Neopentylglycol und etwa 2,51% 1,2-Propandiol als Ausgangsstoffe.

Aus keiner der Literaturstellen geht die vorteilhafte Herstellungsweise von Dicarbonsäure-Neopentylglycolestern hervor, welche in der Ausgangs-Veresterungsmischung 0,2 bis 1,0 Gew.-% Ethylenglycol enthalten.

Es war daher die Aufgabe der vorliegenden Erfindung, ein Verfahren zur Verfügung zu stellen, welches auf einfache Weise die Herstellung von Neopentylglycol-Polyestern und -Mischpolyestern mit mittleren Molgewichten von vorzugsweise 400 – 6000 ohne das Auftreten der genannten Nachteile des Standes der Technik gestattet.

Diese Aufgabe konnte überraschenderweise dadurch gelöst werden, daß man bei der Herstellung von Neopentylglycol-Polyestern und -Mischpolyestern Ethylenglycol in bestimmten, nachstehend näher beschriebenen Konzentrationen mitverwendet.

Gegenstand der vorliegenden Erfindung ist ein Verfahren zur Herstellung von Neopentylglycol-Polyestern und -Mischpolyestern durch Umsetzung von

a) Dicarbonsäuren, deren Anhydriden oder Estern mit Monoalkoholen mit
b) Neopentylglycol und gegebenenfalls
c) weiteren, bei höheren Temperaturen als Neopentylglycol siedenden Glykolen sowie
d) niedrigsiedenden Diolen

unter Abtrennung des Kondensationswassers bzw. Monoalkohols, dadurch gekennzeichnet, daß man die Umsetzung in Gegenwart von 0,2 – 1 Gew.-% Ethylenglycol (als Diol d), bezogen auf Polyester, durchführt.

Ausgangsstoffe für das erfindungsgemäße Verfahren sind Dicarbonsäuren bzw. davon abgeleitete Anhydride oder Ester solcher Carbonsäuren mit niedriger als Neopentylglycol siedenden Monoalkoholen, wie z. B. Phthalsäureanhydrid, Terephthalsäuredimethylester, Isophthalsäure, Maleinsäureanhydrid, Tetrahydrophthalsäure, Adipinsäure, Azelainsäure, Korksäure, Sebacinsäure und Dodecandisäure. Bevorzugt wird Adipinsäure verwendet.

Bei der Herstellung von Neopentylglycol-Mischpolyestern werden neben Neopentylglycol höhersiedende Diole wie z. B.: Hexandiol, Diethylenglycol, Triethylenglycol oder Dipropylenglycol mitverwendet. Bevorzugt wird für diese Polyester als Mischkomponente Hexandiol-1,6 eingesetzt. Als Verzweigungskomponenten können darüber hinaus auch mehrwertige Alkohole, wie z. B. Glycerin, Trimethylolpropan, Pentaerythrit oder Sorbit mitverwendet werden.

Als niedriger als Neopentylglycol siedendes Glycol wird Ethylenglycol verwendet.

Wie bereits oben geschildert, treten bei der Herstellung von Neopentylglycol-Polyestern und -Mischpolyestern nach dem Stande der Technik durch Sublimation von Neopentylglycol Verluste auf. Dies führt zu den schon genannten Nachteilen. Diese Nachteile werden durch die Mitverwendung von Ethylenglycol in den obengenannten Konzentrationen überraschenderweise vermieden. Durch die geringen Mengen dieses erfindungsgemäß zugesetzten Ethylenglycols werden die Eigenschaften der aus solchen Neopentylglycol-Polyestern und -Mischpolyestern hergestellten Kunststoffe nicht beeinträchtigt.

Das erfindungsgemäße Verfahren ermöglicht also für die Zukunft eine breitere technische Nutzung von Neopentylglycol-Polyestern.

Das erfindungsgemäße Verfahren wird bei den für die Polyester-Herstellung üblichen Temperaturen (im Bereich von vorzugsweise 150 – 220° C) und bei üblichen Drücken (Normaldruck bis ca. 5 mbar), ausgeführt. Gegebenenfalls können die für Veresterung üblichen Katalysatoren, wie z. B. Zinn- oder Titan-Verbindungen, beispielsweise Zinn(II)-chlorid oder Titantetrabutylat mitverwendet werden.

Das erfindungsgemäße Verfahren wird vorzugsweise wie folgt durchgeführt:

Man legt die Veresterungskomponenten zusammen mit dem erfindungsgemäß mitzuverwendenden, niedriger als Neopentylglycol siedenden Ethylenglycol unter Stickstoff in einem geeigneten Reaktionsgefäß vor, das mit einer Kolonne mit aufgesetzter Kühlvorrichtung zur Abtrennung des bei der Polyester Herstellung entstehenden Kondensationswassers oder Monoalkohols ausgerüstet ist. Nun wird das Reaktionsgemisch unter Rühren erhitzt, wobei die Temperatur mit fortschreitender Entfernung von Wasser oder Monoalkohol bis auf ca. 200 – 220° C erhöht wird. Eine weitere Steigerung der Temperatur ist nicht ratsam, da sonst stärkere Verfärbungen des Reaktionsprodukts auftreten können. Nachdem die Hauptmenge des Wassers bzw. Monoalkohols abgetrennt ist, wird der Druck im Reaktionsgefäß erniedrigt. Zu diesem Zeitpunkt wird in der Regel auch der Katalysator zugegeben. Unter permanenter Druckreduzierung bis zu einem Enddruck von ca. 200 – 5 mbar (in Abhängigkeit vom mittleren Molgewicht) wird die Veresterung zu Ende geführt, wobei die Restmenge an Wasser oder Monoalkohol entweicht. Die Polyester-Herstellung insgesamt dauert ca. 20 – 50 Stunden. Das erfindungsgemäße Verfahren kann nach den bekannten Methoden des Standes der Technik diskontinuierlich oder kontinuierlich durchgeführt werden.

Die nach dem erfindungsgemäßen Verfahren hergestellten Neopentylglycol-Polyester und -Mischpolyester können als Ausgangsmaterialien für eine Vielzahl von Kunststoffen verwendet werden: So z. B. für die Herstellung von Polyesterharzen, Polyurethan-Schaumstoffen, Klebstoffen, PUR-Thermoplasten, Lacken und Beschichtungen jeglicher Art. Sie verleihen diesen Kunststoffen neben guten Kälteeigenschaften eine besondere Hydrolysen-, Thermo- und Lichtstabilität.

Die nachfolgenden Beispiele dienen der näheren Erläuterung der Erfindung. Alle Prozentangaben beziehen sich, soweit nicht anderslautend vermerkt, auf Gewichtsprozente.

### Beispiel 1

In einer für Schmelzveresterungen üblichen, mit Stickstoff gespülten Apparatur, bestehend aus Reaktionsgefäß, Kolonne und aufgesetztem Kühler, wurden 44,57 kg Adipinsäure und 48,91 kg Neopentylglycol unter Zusatz von 0,5 kg Ethylenglycol (0,6%, bezogen auf Polyester) vorgelegt. Die Reaktionsmischung wurde bei Normaldruck bis auf 200° C erhitzt, wobei die Hauptmenge des Kondensationswassers abdestillierte. Dann wurde bei gleicher Temperatur unter vermindertem Druck (bis 120 mbar) in Gegenwart von 2 g Zinn(II)-chlorid als Katalysator die Kondensation unter Abtrennung des restlichen Wassers zu Ende geführt. Die Gesamtveresterungszeit betrug 25 Stunden. Der Polyester hatte eine Hydroxylzahl von 224 ($\eta_{25°C} = 2700$ mPa · s).

### Vergleichsbeispiel

Die Schmelzveresterung wurde mit den gleichen Ausgangskomponenten wie in Beispiel 1 und unter den dort angegebenen Bedingungen, jedoch ohne Zusatz von Ethylenglycol durchgeführt. Hierbei traten starke Ablagerungen von Neopentylglycol in der Kolonne und insbesondere am Kolonnenkopf auf. Auch gelangte ein großer Teil des Neopentylglycols mit dem Kondensationswasser in das dafür vorgesehene Vorlagegefäß. Nach Beendigung der Veresterung lag die Hydroxylzahl des Polyesters nicht im gewünschten Bereich, sondern bei 157.

### Beispiel 2

Analog Beispiel 1 wurden 4599 g Adipinsäure mit 4056 g Neopentylglycol unter Zusatz von 50 g Ethylenglycol (0,7%, bezogen auf Polyester) zunächst bis 200° C bei Normaldruck und anschließend in Gegenwart von 200 mg Zinn(II)-chlorid als Katalysator unter vermindertem Druck (bis 20 mbar) innerhalb von 30 Stunden verestert. Die Hydroxylzahl des Polyesters betrug 112 ($\eta_{25°C} = 6900$ mPa · s).

### Patentansprüche

1. Verfahren zur Herstellung von Neopentylglycol-Polyestern und -Mischpolyestern durch Umsetzung von

a) Dicarbonsäuren, deren Anhydriden oder Estern mit Monoalkoholen mit
b) Neopentylglycol und gegebenenfalls
c) weiteren, bei höheren Temperaturen als Neopentylglycol siedenden Glycolen, sowie
d) niedrigsiedenden Diolen

unter Abtrennung des Kondensationswassers bzw. des Monoalkohols, dadurch gekennzeichnet, daß man die Umsetzung in Gegenwart von 0,2–1 Gew.-% Ethylenglycol (als Diol d), bezogen auf Polyester, durchführt.

2. Verfahren nach Anspruch 1, dadurch gekennzeichnet, daß man als Dicarbonsäure Adipinsäure einsetzt.

3. Verfahren nach Anspruch 1 und 2, dadurch gekennzeichnet, daß man als höhersiedendes Glycol Hexandiol-1,6 mitverwendet.

### Claims

1. Process for the preparation of neopentyl glycol polyesters and copolyesters by the reaction of

a) dicarboxylic acids, their anhydrides or esters with monohydric alcohols with
b) neopentyl glycol and optionally
c) other glycols boiling at higher temperatures than neopentyl glycol, and
d) low-boiling diols

accompanied by the removal of the water of condensation or of the monohydric alcohol, characterised in that the reaction is carried out in the presence of 0.2–1% by weight of ethylene glycol (as the diol d), based on the polyester.

2. Process according to Claim 1, characterised in that adipic acid is used as the dicarboxylic acid.

3. Process according to Claim 1 and 2, characterised in that 1,6-hexanediol is also used as a higher-boiling glycol.

### Revendications

1. Procédé de fabrication de polyesters et copolyesters de néopentylglycol par réaction

a) d'acide dicarboxylique, de leurs anhydrides ou esters avec des monoalcools, avec
b) du néopentylglycol et éventuellement
c) d'autres glycols bouillant à des températures plus élevées que le néopentylglycol, ainsi que
d) des diols à point d'ébullition inférieur

avec séparation de l'eau de condensation ou du monoalcool, caractérisé en ce qu'on exécute la réaction en présence de 0,2–1% en poids d'éthylène glycol (en tant que diol d)), par rapport au polyester.

2. Procédé selon la revendication 1, caractérisé en ce qu'on utilise de l'acide adipique en tant qu'acide dicarboxylique.

3. Procédé selon les revendications 1 et 2, caractérisé en ce qu'on utilise conjointement de l'hexane diol-1,6 en tant que glycol à point d'ébullition plus élevé.